# FASCICULE DE BREVET EUROPEEN

(11) **EP 3 234 315 B1**
(45) Date de publication et mention de la délivrance du brevet: **28.08.2019**
(21) Numéro de dépôt: 15770567.4
(22) Date de dépôt: 10.09.2015
(51) Int. Cl.: F01N 3/10, F01N 3/021, F01N 13/00

(54) **GROUPE MOTOPROPULSEUR D'UN VÉHICULE DOTÉ D'UN SYSTÈME DE DÉPOLLUTION AMÉLIORÉ**
FAHRZEUGANTRIEBSEINHEIT MIT VERBESSERTEM ABGASREINIGUNGSSYSTEM
VEHICLE POWERTRAIN ASSEMBLY WITH IMPROVED EXHAUST GAS CLEANING SYSTEM

(30) Priorité: 18.12.2014 FR 1462749
(43) Date de publication de la demande: 25.10.2017
(73) Titulaire: Renault S.A.S., 92100 Boulogne-Billancourt (FR)
(72) Inventeur: FRERE, Xavier, F-92360 Meudon La Foret (FR); RAGOT, Patrick, F-95870 Bezons (FR); LE NAOUR, Steven, F-92400 Courbevoie (FR)
(86) Numéro de dépôt international: PCT/FR2015/052406
(87) Numéro de publication internationale: WO 2016/097503

(56) Documents cités:
- EP-A1- 0 806 554
- EP-A1- 2 261 475
- FR-A3- 3 007 068
- US-A1- 2013 097 978

## Description

L'invention se rapporte à un groupe motopropulseur d'un véhicule doté d'un système de dépollution amélioré.

Un tel groupe motopropulseur comprend un moteur thermique, et le système de dépollution est placé sur une ligne d'échappement dudit moteur. Ce système de dépollution permet de limiter les émissions de particules polluantes dans l'atmosphère, telles que par exemple, des particules de monoxyde de carbone ou d'oxyde d'azote (NOx). Généralement, un tel système de dépollution comprend un filtre (FAP) à particules et un catalyseur d'oxydation (DOC) montés en série sur la ligne d'échappement.

Actuellement, la place disponible dans le véhicule à proximité du moteur pour installer ce système de dépollution est de plus en plus réduite à cause, d'une part, des volumes de dépollution augmentés du fait des normes de dépollution qui sont de plus en plus sévères, et d'autre part, des compartiments moteur qui deviennent plus exigus du fait de l'augmentation des fonctions qui y sont implantées et de l'accroissement des exigences en terme d'insonorisation. Il en résulte un encombrement de la ligne d'échappement occasionné par certains éléments constituant ce système de dépollution, et donc des pertes de charge importantes qui induisent une perte de puissance du moteur. En effet, ces éléments ont tendance à obturer partiellement la ligne d'échappement, empêchant les gaz d'échappement traités d'être évacués efficacement du véhicule, avec un débit suffisant.

Le document EP 2 261 475 A1 expose un groupe motopropulseur pour un véhicule, comprenant un moteur thermique et un système de dépollution comportant un catalyseur d'oxydation et un filtre à particules monté sur une ligne d'échappement dudit moteur, ledit catalyseur étant situé en amont dudit filtre, la ligne comprend un segment amont, suivi d'un segment principal logeant le catalyseur d'oxydation et le filtre à particules et un segment terminal perpendiculaire au segment principal et comportant une section de passage par laquelle sont évacués les gaz d'échappement, le catalyseur d'oxydation et le filtre à particules ont une forme cylindrique avec deux faces circulaires planes.

Le document EP 0 806 554 A1 décrit un groupe motopropulseur pour un véhicule, comprenant un moteur thermique et un système de dépollution comportant deux catalyseurs monté sur une ligne d'échappement dudit moteur qui comprend un segment amont, suivi d'un segment principal logeant les deux catalyseurs et un segment terminal perpendiculaire au segment principal et comportant une section de passage par laquelle sont évacués les gaz d'échappement, le catalyseur en amont est un catalyseur d'oxydation.

Un groupe motopropulseur selon l'invention, comprend un système de dépollution apte à venir s'insérer dans un espace réduit situé à coté du moteur, tout en diminuant, voire en éliminant, les pertes de charge entrevues dans les groupes motopropulseurs déjà existants.

L'invention a pour objet un groupe motopropulseur pour un véhicule selon la revendication 1, comprenant un moteur thermique et un système de dépollution comportant un bloc monolithique monté sur une ligne d'échappement dudit moteur, ledit bloc possédant un catalyseur d'oxydation et un filtre à particules, ledit catalyseur étant situé en amont dudit filtre.

La principale caractéristique d'un système de dépollution selon l'invention est que le catalyseur d'oxydation présente une extrémité d'entrée en biseau permettant de reculer le bloc monolithique dans la ligne d'échappement, de manière à dégager un segment terminal de ladite ligne pour assurer l'évacuation des gaz d'échappement avec un débit accru. Il est supposé que le bloc monolithique est délimité par une extrémité d'entrée du catalyseur d'oxydation et par une extrémité de sortie du filtre à particules. Le principe de l'invention consiste donc à modifier la géométrie du bloc monolithique pour permettre de le déplacer dans la ligne d'échappement, afin de dégager la ligne d'échappement. Cette modification intervient au niveau de l'extrémité d'entrée du catalyseur d'oxyde. Ainsi, par rapport à un catalyseur d'oxydation de forme sensiblement cylindrique et possédant deux faces d'extrémité circulaires et planes, un catalyseur d'oxydation possédant une extrémité d'entrée biseautée, peut être reculé dans la ligne d'échappement sans remettre en question le passage des gaz d'échappement en provenance du moteur. Le recul du catalyseur d'oxydation signifie le recul du bloc monolithique dans la ligne d'échappement, car ledit catalyseur est l'un des composants dudit bloc. Par conséquent, puisque la ligne d'échappement était partiellement obturée par l'extrémité de sortie du filtre à particules, le recul du bloc monolithique se traduit par un retrait de ladite extrémité de sortie, et donc par une augmentation de la section de passage des gaz dans ladite ligne.

La ligne d'échappement possède un segment principal dans lequel est inséré le bloc monolithique de dépollution et un segment terminal d'évacuation des gaz qui est perpendiculaire par rapport audit segment principal, le recul dudit bloc au sein du segment principal permettant d'augmenter la section de passage des gaz dans ledit segment terminal. Il est supposé que le segment terminal est en communication avec le segment principal. Un recul du bloc monolithique dans le segment principal, rendu possible par l'extrémité d'entrée biseautée du catalyseur d'oxyde, se traduit par un retrait de l'extrémité de sortie du filtre à particules dans le segment terminal, permettant audit segment terminal de ne plus être obturé par l'extrémité de sortie du filtre à particules.

Le segment terminal est perpendiculaire au segment principal.

Avantageusement, le volume du catalyseur d'oxydation est constant par rapport à celui d'un catalyseur conventionnel, dépourvu d'une face d'entrée en biseau. Il est important de souligner que le recul bloc monolithique est rendu possible par une modification de la géométrie dudit bloc, et non pas par une diminution du volume d'au moins l'un de ses composants. L'intérêt de l'invention est que le système de dépollution à travers le bloc monolithique, conserve la même capacité de dépollution.

De façon préférentielle, le bloc monolithique comprend un mélangeur interposé entre le catalyseur et le filtre à particules.

Préférentiellement, le biseau présente une pente inclinée avec un angle compris entre 10 et 15°. De façon avantageuse, l'angle est égal à 11.4°.

Avantageusement, le volume du catalyseur d'oxydation est de 1.6 litre.

De façon préférentielle, le volume du filtre à particule est de 2.5 litres.

Préférentiellement, la distance de recul du bloc monolithique dans la ligne d'échappement est comprise entre 1cm et 3cm. De façon préférentielle, la distance de recul est égale à 2 cm.

Avantageusement, le groupe motopropulseur selon l'invention, comprend un moteur diesel.

Un groupe motopropulseur selon l'invention présente l'avantage de posséder un système de dépollution performant tout en permettant un écoulement efficace des gaz d'échappement dans la ligne d'échappement, malgré des espaces disponibles limités dans le véhicule. Il a de plus l'avantage de posséder un système de dépollution d'un encombrement constant dans la mesure où le bloc monolithique est modifié géométriquement et non pas en volume.

On donne, ci-après, une description détaillée d'un mode de réalisation préféré d'un groupe motopropulseur et d'un système de dépollution selon l'invention, en se référant aux figures 1 à 3.
- La figure 1 est une vue schématique de coté d'un bloc monolithique d'un système de dépollution d'un groupe motopropulseur selon l'état de la technique,
- La figure 2 est une vue schématique de coté d'un bloc monolithique d'un système de dépollution d'un groupe motopropulseur selon l'invention,
- La figure 3 est une vue simplifiée de coté d'un catalyseur d'oxyde d'un bloc monolithique d'un système de dépollution d'un groupe motopropulseur selon l'invention.

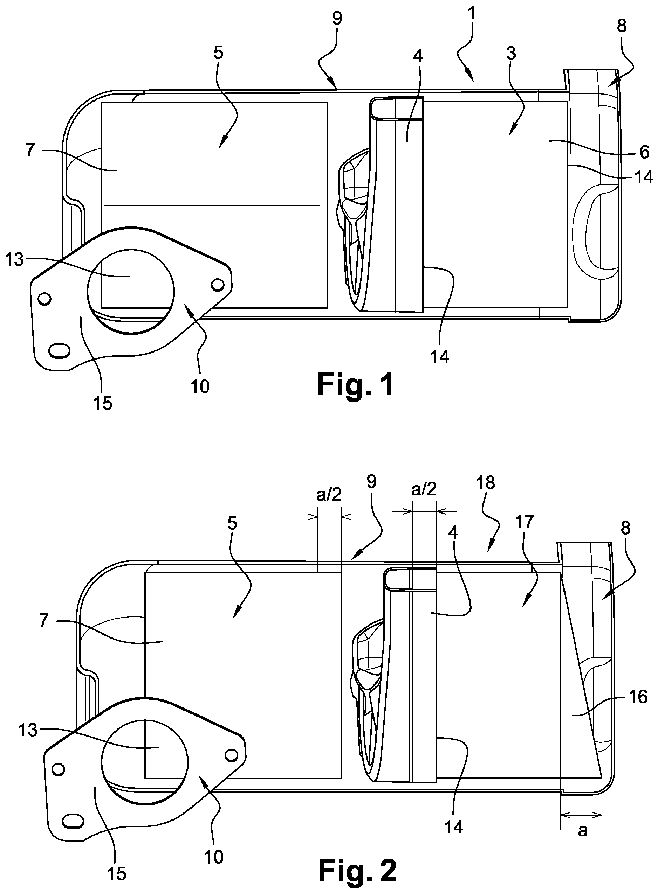

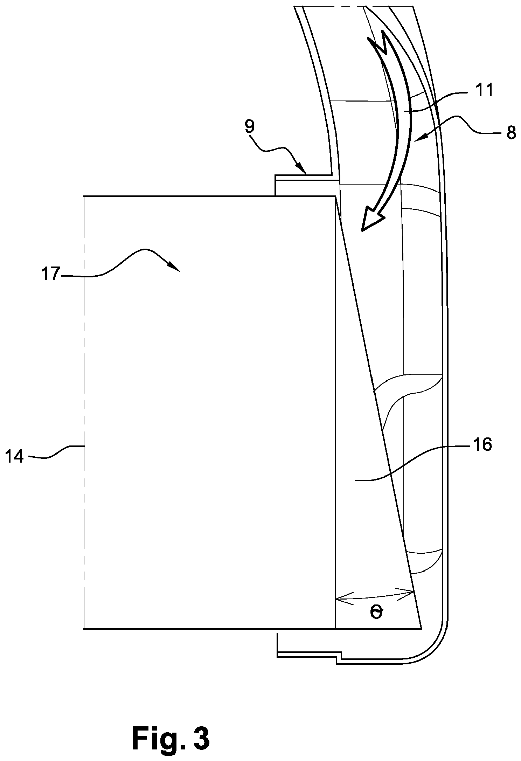

En se référant aux figures 1 et 2, un groupe motopropulseur comprend un moteur thermique (non visible sur les figures) et une ligne d'échappement sur laquelle est disposé un système de dépollution 1 des gaz d'échappement émis par ledit moteur. De cette manière, lesdits gaz transitent d'abord par le système de dépollution 1 avant d'être ensuite évacués hors du véhicule. Un tel système de dépollution 1 est conçu pour limiter, voire éliminer, les particules polluantes telles que par exemple les particules de monoxyde de carbone et d'oxyde d'azote. Le système de dépollution 1 comporte un catalyseur 3 d'oxydation, un mélangeur 4 et un filtre 5 à particules, lesdits trois éléments 3, 4, 5 formant un bloc monolithique, dont la longueur totale est invariable. La coupure entre le mélangeur 4 et le filtre 5 à particules, qui est visible sur les figures 1 et 2, est artificielle et a pour but de montrer la géométrie des différentes pièces impliquées dans le système de dépollution 1. Sur la ligne d'échappement, le catalyseur 3 est situé en amont du mélangeur 4, qui est lui-même situé en amont du filtre 5 à particules. Autrement dit, le bloc monolithique présente une première extrémité 6 correspondant à une extrémité d'entrée du catalyseur 3, et une deuxième extrémité 7 correspondant à une extrémité de sortie du filtre 5 à particules. Schématiquement, la ligne d'échappement comprend un segment amont 8, suivi d'un segment principal 9 logeant le bloc monolithique du système de dépollution 1, et un segment terminal 10 par lequel sont évacués les gaz d'échappement une fois qu'ils ont été nettoyés par ledit système de dépollution. Le segment terminal est perpendiculaire au plan des figures 1 et 2 et est matérialisé par une bride 15 de fixation. Le segment amont 8 et le segment principal 9 sont sensiblement perpendiculaires à plus ou moins 15°, et ledit segment principal 9 et le segment terminal 10 sont sensiblement perpendiculaires à plus ou moins 15°. Les trois segments 8, 9, 10 sont en continuité les uns des autres, les gaz en provenance du moteur transitant d'abord par le segment amont 8 comme l'indique la flèche 11 de la figure 3, puis par le segment principal 9 où ils sont nettoyés. Ils sont enfin évacués par le segment 10 terminal pour être rejetés propres hors du véhicule.

En se référant à la figure 1, un groupe motopropulseur selon l'état de la technique, comprend un système de dépollution 1 comportant un bloc monolithique, dont le filtre 5 à particules a une forme cylindrique et un volume de 2.5 litres, et dont le catalyseur 3 d'oxydation a également une forme cylindrique et un volume de 1.6 litres. Le catalyseur d'oxydation 3 est délimité par deux faces circulaires planes 14. Avec de telles formes et de tels volumes, le bloc monolithique déborde dans le segment terminal 10 au niveau de l'extrémité 7 de sortie du filtre à particules. En effet, comme cela est visible sur la section 13 de passage des gaz dans le segment terminal 10, le filtre 5 à particules vient occuper une fraction importante de ladite section, rendant difficile le passage des gaz qui ont été préalablement nettoyés par le système de dépollution 1. Une section réduite du segment terminal 10 va créer une contrepression importante à la sortie du système de dépollution 1, qui va engendrer des contraintes importantes au niveau de la ligne d'échappement.

En se référant à la figure 2, afin de remédier à une obstruction partielle du segment terminal par l'extrémité de sortie 7 du filtre 5 à particules, l'extrémité d'entrée 16 du catalyseur 17 d'oxydation d'un système de dépollution 18 d'un groupe motopropulseur selon l'invention, a été biseautée pour permettre de reculer ledit catalyseur 17 au sein du segment principal 9 de la ligne d'échappement. En effet, le volume global du catalyseur 3 est conservé et maintenu à 1.6 litres, la création de cette extrémité 16 biseautée permettant de transférer une partie dudit catalyseur 17 dans le canal amont 8. Puisqu'une partie 16 du catalyseur 17 a été transférée dans le canal amont 8 et puisque ledit catalyseur 17 conserve le même volume, la face circulaire plane 14 située à l'extrémité aval dudit catalyseur est donc fatalement reculée dans le segment principal 9. En effet, grâce à cette extrémité biseautée 16, le catalyseur 17 peut déborder dans le canal amont 8 sans entraver le débit des gaz d'échappement en provenance du moteur et destiné à transiter par le système de dépollution 1. De cette manière, le catalyseur 17 faisant partie intégrante du bloc monolithique, un recul dudit catalyseur 17 entraine fatalement un recul dudit bloc dans le segment principal 9 de la ligne d'échappement, permettant ainsi le dégagement du segment terminal 10.

En se référant à la figure 3, l'extrémité biseautée 16 du catalyseur d'oxydation 17 présente une pente inclinée d'un angle θ compris entre 10° et 15° par rapport à une face plane qui serait perpendiculaire à l'axe de révolution dudit catalyseur 17. Plus spécifiquement, cet angle θ vaut 11.4°. Si la hauteur du biseau 16 vaut « a », alors l'ensemble du bloc monolithique peut être reculé d'une distance a/2 dans le segment principal 9 de la ligne d'échappement. Une translation d'une distance a/2 de l'extrémité de sortie 7 du filtre 5 à particules permet ainsi de dégager la section de passage des gaz dans le segment terminal 10. Ainsi grâce à cette extrémité biseautée 16, le bloc monolithique peut être reculé d'environ 2cm à plus ou moins 0.5cm près, dans le segment principal 9 de la ligne d'échappement, pour dégager le passage des gaz dans le segment terminal 10.

Il est à noter que ladite extrémité biseautée 16 permettant d'optimiser l'encombrement des systèmes de post-traitement des gaz tout en favorisant la sortie desdits gaz, peut être appliquée avec tous les monolithes de post-traitement, à part les filtres à particules.

## Revendications

1. Groupe motopropulseur pour un véhicule, comprenant un moteur thermique et un système de dépollution (1, 18) comportant un bloc monolithique monté sur une ligne d'échappement dudit moteur qui comprend un segment amont (8), suivi d'un segment principal (9) logeant le bloc monolithique et un segment terminal (10) perpendiculaire au segment principal et comportant une section de passage par laquelle sont évacués les gaz d'échappement, ledit bloc monolithique possédant un catalyseur (17) d'oxydation de forme cylindrique avec une face aval circulaire plane et un filtre (5) à particules de forme cylindrique avec deux faces circulaires planes, ledit catalyseur (17) étant situé en amont dudit filtre (5), le catalyseur d'oxydation (17) présente une extrémité d'entrée (16) en biseau permettant de transférer une partie du catalyseur du bloc monolithique du segment principal dans le segment amont (8), de manière à dégager la section de passage des gaz dans le segment terminal (10) de ladite ligne .

2. Groupe motopropulseur selon la revendication 1, **caractérisé en ce que** le volume du catalyseur d'oxydation (17) est constant par rapport à celui d'un catalyseur (3) conventionnel de forme sensiblement cylindrique et possédant deux faces d'extrémité circulaires et planes, dépourvu d'une face d'entrée en biseau.

3. Groupe motopropulseur selon l'une quelconque des revendications 1 ou 2, **caractérisé en ce que** le bloc monolithique comprend un mélangeur (4) interposé entre le catalyseur (17) et le filtre (5) à particules.

4. Groupe motopropulseur selon l'une quelconque des revendications 1 à 3, **caractérisé en ce que** le biseau présente une pente inclinée avec un angle compris entre 10 et 15°.

5. Groupe motopropulseur selon l'une quelconque des revendications 1 à 54 **caractérisé en ce que** le volume du catalyseur d'oxydation (3, 17) est de 1.6 litre.

6. Groupe motopropulseur selon l'une quelconque des revendications 1 à 5, **caractérisé en ce que** le volume du filtre (5) à particule est de 2.5 litres.

7. Groupe motopropulseur selon l'une quelconque des revendications 1 à 6, **caractérisé en ce qu'**il comprend un moteur diesel.

## Patentansprüche

1. Antriebseinheit für ein Fahrzeug, das einen Wärmekraftmotor und ein Entgiftungssystem (1, 18) enthält, das einen monolithischen Block aufweist, der auf eine Abgasleitung des Motors montiert ist, die ein stromaufwärtiges Segment (8) gefolgt von einem Hauptsegment (9), in dem der monolithische Block untergebracht ist, und ein Endsegment (10) lotrecht zum Hauptsegment und einen Durchlassöffnung aufweisend enthält, durch die die Abgase abgeführt werden, wobei der monolithische Block einen Oxidationskatalysator (17) zylindrischer Form mit einer ebenen kreisförmigen stromabwärtigen Seite und einen Partikelfilter (5) zylindrischer Form mit zwei ebenen kreisförmigen Seiten besitzt, wobei der Katalysator (17) sich stromaufwärts vor dem Filter (5) befindet, wobei der Oxidationskatalysator (17) ein abgeschrägtes Eingangsende (16) aufweist, das es ermöglicht, einen Teil des Katalysators des monolithischen Blocks vom Hauptsegment in das stromaufwärtige Segment (8) zu übertragen, um die Durchlassöffnung der Gase im Endsegment (10) der Leitung freizulegen.

2. Antriebseinheit nach Anspruch 1, **dadurch gekennzeichnet, dass** das Volumen des Oxidationskatalysators (17) bezüglich desjenigen eines üblichen Katalysators (3) von im Wesentlichen zylindrischer Form und zwei kreisförmige und ebene Endseiten besitzend, der keine abgeschrägte Eingangsseite hat, konstant ist.

3. Antriebseinheit nach einem der Ansprüche 1 oder 2, **dadurch gekennzeichnet, dass** der monolithische Block einen Mischer (4) enthält, der zwischen den Katalysator (17) und den Partikelfilter (5) eingefügt ist.

4. Antriebseinheit nach einem der Ansprüche 1 bis 3, **dadurch gekennzeichnet, dass** die Abschrägung eine mit einem Winkel zwischen 10 und 15° geneigte Schräge aufweist.

5. Antriebseinheit nach einem der Ansprüche 1 bis 54, **dadurch gekennzeichnet, dass** das Volumen des Oxidationskatalysators (3, 17) 1,6 Liter beträgt.

6. Antriebseinheit nach einem der Ansprüche 1 bis 5, **dadurch gekennzeichnet, dass** das Volumen des Partikelfilters (5) 2,5 Liter beträgt.

7. Antriebseinheit nach einem der Ansprüche 1 bis 6, **dadurch gekennzeichnet, dass** sie einen Dieselmotor enthält.

## Claims

1. Powertrain assembly for a vehicle, comprising a heat engine and a pollution removal system (1, 18) comprising a monolithic block mounted on an exhaust line of said engine, which comprises an upstream segment (8) followed by a main segment (9) housing the monolithic block and a final segment (10) perpendicular to the main segment and comprising a passage section through which the exhaust gases are evacuated, said monolithic block having an oxidation catalytic converter (17), which is cylindrical with a planar circular downstream face, and having a particle filter (5) which is cylindrical with two planar circular faces, said catalytic converter (17) being located upstream of said filter (5), the oxidation catalytic converter (17) having an inlet end (16) that is slanted such that it is possible to transfer part of the catalytic converter from the monolithic block of the main segment into the upstream segment (8), so as to free up the gas passage section in the final segment (10) of said line.

2. Powertrain assembly according to Claim 1, **characterized in that** the volume of the oxidation catalytic converter (17) is constant relative to that of a conventional catalytic converter (3) that is essentially cylindrical with two planar circular end faces, not having a slanted inlet face.

3. Powertrain assembly according to either one of Claims 1 and 2, **characterized in that** the monolithic block comprises a mixer (4) interposed between the catalytic converter (17) and the particle filter (5).

4. Powertrain assembly according to any one of Claims 1 to 3, **characterized in that** the slanted portion has a slope angle of between 10 and 15°.

5. Powertrain assembly according to any one of Claims 1 to 54, **characterized in that** the volume of the oxidation catalytic converter (3, 17) is 1.6 litres.

6. Powertrain assembly according to any one of Claims 1 to 5, **characterized in that** the volume of the particle filter (5) is 2.5 litres.

7. Powertrain assembly according to any one of Claims 1 to 6, **characterized in that** it comprises a diesel engine.
